# EUROPEAN PATENT APPLICATION

(11) **EP 2 369 325 A1**
(43) Date of publication of application: **28.09.2011**
(21) Application number: 10156375.7
(22) Date of filing: 12.03.2010
(51) Int. Cl.: G01N 21/64

(54) **Array analysis for online detection**

(71) Applicant: EPPENDORF AG, 22339 Hamburg (DE)
(72) Inventor: Remacle, Jose Dr., 5100 Jambes (BE); Zammatteo, Nathalie Dr., 5024 Gelbressee (BE); Alexandre, Isabelle Dr., 5340 Haltinne (BE); Pluester, Wilhelm Dr., 3080 Tervueren (BE)
(74) Representative: Becker Kurig Straus

(57) **Abstract**

The invention provides a method and kit for performing the analysis of a microarray surface having immobilized capture molecules used for detection and/or quantification of one or multiple target biological molecules labelled with a fluorophore and being present in a solution comprising a light absorbing agent that has an absorption band which overlaps the emission and/or absorption band of the fluorophore and is not a quencher molecule of the label of the target molecules.

## Description

### Field of the invention

The present invention relates to a method and kit for detecting and/or quantifying one or multiple target molecules present in a solution by quantifying their binding on specific capture molecules immobilized on the surface of a transparent solid support in the presence of the target being present in the solution. The invention allows analysis of the microarray surface on which the targets are bound to their specific capture molecules in the presence of the target solution. The present invention is also related to correct online identification of multiple labelled target molecules (nucleic acid or protein). Finally the invention is also applicable for real-time PCR of multiple targets detected on immobilized capture molecules.

### Description of the related art

Micro-array technology is one answer to the request of analytical assays for low level of biological compounds. It enables massive parallel determinations and multiple measurements for binding events to be performed simultaneously in the same solution. Micro-arrays usually consist of many microscopic spots each one containing identical molecules, i.e. nucleic acids or proteins acting as capture molecules. The number of spots varies from a few spots to several thousand. The molecules are immobilized to a solid support by an attachment preferably by covalent link. The primary task of a micro-array experiment is to simultaneously detect many binding events present in the same sample.

Because of its high sensitivity, fluorescence is the preferred label for microarray analysis.. Binding of the target on their capture molecules is achieved in a first incubation step and the final scanning is performed after appropriately washing and drying of the micro-array. Micro-array readers usually acquire information about the fluorescence intensity after a long incubation time that would ideally be the time after reaching the thermodynamic equilibrium. However, under the conventional conditions employed in the chip experiments, the thermodynamic equilibrium is difficult to obtain and not reached at the same time for the different targets, being present in a biological sample at different concentrations that may vary by several logs scale. Moreover the different targets show difference in their binding kinetic, their diffusion constant and the concentration of their specific capture molecules. So in a fixed experiment setting using detection after a given time of incubation, it is difficult to settle down experimental conditions in which the amount of the targets bound to their capture molecules would be directly proportional to their solution concentrations.

One solution to overcome the variability on the binding efficiency of the concentration dependence of the different targets present in a single sample is to obtain online binding data for each individual target present in the solution. The binding reactions can then be followed in real time with quantification based on the kinetics parameters rather than on the absolute value of bound targets. The process also allows dramatic simplification of the experimental protocol since all the reaction and detection are provided in one step avoiding the washing steps.

The challenge for reaching this goal is to be able to differentiate the signal from a label target bound onto a solid support from the same label target being present in the solution. Fortunately several physical methods have this feature and have been proposed for micro-array detection.

Evanescence wave for excitation of the bound target is one of the physical method which allows such differentiation. It is based on the fact that in particular physical set up the light reaching the surface of the support produces an electro magnetic wave which is able to excite the molecule being present on or in very close vicinity to the support surface.

Stimpson et al. (1995, PNAS, 92, 6379-83) described the use of a particulate label on a target DNA which acts as a light-scattering source when illuminated by the evanescent wave of the wave guide and only the label bound to the surface generates a signal. WO 99/20789 also discloses a method based on scattered light produced by a particulate label adsorbed at multiple DNA capture zones placed on a wave guide surface. The light scattering is produced by an evanescence wave created by a wave guide. Since an evanescent wave only extends a few hundred nanometers from the wave-guide surface, the unbound/dissociated label does not scatter light and a wash step is not required. Desorption of the light-scattering label was followed in real-time. Evanescence is associated with Total Internal Reflection Fluorescence (TIRF) ofthe excitation light.

Lehr et al. (2003, Anal. Chem., 75, 2414-2420) propose to use TIRF in order to follow the hybridization of target probes (Real-time detection) on a micro-array. The targets are obtained in a PCR cycler and are made single stranded by removing the second strand by a special treatment. The targets are labelled with biotin and after hybridization, they are made fluorescent by incubation with the streptavidin Cy5. Lehr et al. (2003, Sensors and Actuators, 92, 303-314) developed a mathematical model and they propose an optical setup for the use of the TIRF detection method to follow the kinetic of hybridization of a fluorescent molecule such as Cy5. The documents do not mention nor cite the detection of amplicons during the PCR cycles by hybridization onto immobilized probes.

In the same line, US-P-5,633,724 provides method and apparatus for detecting a target substance in a pixel array using a total internal reflection (TIR) member having a TIR surface on which a pixel array is located and using evanescence excitation of the target substance.

Evanescence associated with the TIR is a method which can discriminate between the bound to the non bound target but its application to array measurement is made difficult due to the fact that one requirement is that the same amount of bound target located at different locations has to give the same signal. This requires the same excitation, meaning the same light reaching the overall surface of the array surface. To obtain uniform light on the entire surface where the different captures are located is a difficult task since by principle, the evanescence excitation requires the illumination light to go through inside the support as TIR, and so the light reaches the surface by the side of the support on which the probes are located or by a very tangential angle.

In WO 2004/044171, the support is used as a waveguide in order to detect the light emitted by the target bound to capture molecules on the surface of a support. The bound molecules are excited by a moving light source and the emitted fluorescent light is collected at the edge of the support after having moved in the support as total internal reflection. The fact that the light goes through the support as internal reflection forces the detection to be performed after illumination of parts of the surface of the support by a moving illumination device and to reconstitute the pattern of the emission on the surface thereafter.

The US-P-6,416,951 teaches a method for measuring in real-time the kinetics of hybridization of RNA with a polynucleotide probe. The kinetics are measured by either hybridizing in the presence of an intercalation dye and recording a change in the spectroscopic properties of the dye as hybridizing proceeds, or incorporating a label in the RNA or the probe, attaching the non-labelled molecule to a solid support, generating an evanescent wave in the proximity of the attached molecule and recording the increase in a signal generated by interaction of the evanescent wave with the label, as hybridization proceeds.

The WO 06/053769 and WO 06/053770 propose another physical method for real-time detection of a target being in solution while reacting on its corresponding immobilized capture molecule. Moreover, the WO 06/053770 described the detection during the PCR cycles so as to obtain a real-time PCR. The physical method takes party of the confocal scanning method which allows obtaining a higher signal from the bound target where the excitation light is focused than from the target present in the solution.

WO 03/023377 still describes another alternative method to discriminate between a luminescent medium close to the substrate from a medium further away form the substrate. The method uses a detector adapted to detect light emitted through the lower surface of the substrate at angles greater than the critical angle of the medium/substrate interface. However, the physical setting of the invention does not provide imaging the analyzed surface onto the detector surface but only a one point detection which is not adapted for microarray detection.

EP 2017354A1 used forbidden angle detection which enables imaging the analyzed surface onto the detector surface allowing simultaneous detection of labelled target molecules bound to a solid support in spatially distinct region in presence of a solution containing the labelled target molecules.

As seen by this review, there have been different physical based methods proposed for performing online detection of target molecules to capture molecules while the targets are present in solution.

However, in practice, while the results are positive and convincing, the analysis of the array surface having bound targets is often difficult due to the presence of false positive signals in some locations of the surface. The correct recognition of the array configuration by automatic gridding is also difficult due to non specific signals.

They are several reasons for these limitations: the discrimination of the bound target from the target in solution is not always complete due to the presence of some internal light reflections in the support, to the presence of scratches or imperfections on or in the solid support and/or non homogeneity or dust in the biological sample or solution. Consequently, interferences are present on the surface resulting in some non specific signals which can be very significant and interfere with the array analysis.

### Summary of the invention

The aim of the invention is to improve the surface analysis of a microarray present on a support surface on which the targets are specifically bound to immobilized capture molecules present in specific locations while the targets are present in a solution in contact with the capture molecules during the detection.

The method for the analysis of a microarray surface having immobilized capture molecules used for detection and/or quantification of one or multiple target biological molecules labelled with a fluorophore and being present in a solution comprises:
a) providing a transparent solid support with a surface having multiple capture molecules immobilized in particular surface locations forming a micro-array configuration having at least four different locations per cm²,
b) contacting said solution containing said labelled target molecules with said solid support for specific binding between said labelled target and capture molecules wherein said solution comprises a light absorbing agent,
c) illuminating the surface of the support on which the labelled target molecules are bound using an excitation light reaching said surface through the support in the presence of the solution containing said labelled target molecules thereby causing excitation of the labelled target molecules, wherein said light absorbing agent has an absorption band which overlaps the emission and/or absorption band of the fluorophore and is not a quencher molecule of the label of the target molecules,
d) detecting the light emitted from the said surface locations through said support,
e) analyzing the surface of the support in order to discriminate between the locations of the micro-array having bound targets and the locations deprived of target molecules wherein the discrimination is perfect so that no signal is attributed as positive signal to location(s) deprived of target molecules and to associate positive signal value at the location(s) related to bound labelled target molecules, and
f) detecting and/or identifying and/or quantifying the target (s) molecules present in the solution.

The invention also related to a method for performing the analysis of a microarray surface having immobilized capture molecule for performing real time PCR amplification of a polynucleotide molecule being present in a solution, said method comprising the steps of:
a) providing a closed device comprising a transparent solid support with a surface having capture polynucleotide molecules immobilized thereon in at least one particular surface location;
b) introducing a solution containing said polynucleotide molecule into said closed device, reagents for polynucleotide amplification, at least one label being a fluorophore and at least one light absorbing molecule as a light absorbing agent which has an absorption band which overlaps the emission and/or absorption band of the fluorophore and is not a quencher molecule of said at least one fluorescent label;
c) submitting the solution to at least 2 thermal cycles having at least 2 and preferably 3 different temperature steps in order to obtain labelled target polynucleotide molecules by PCR amplification;
d) measuring at least twice the obtained labelled target polynucleotide molecules present in said solution after or during at least two thermal cycles in the following way:
   - incubating said labelled target polynucleotide molecules under conditions allowing a specific binding between said labelled target polynucleotide molecules and corresponding capture molecules,
   - illuminating the surface of the support on which the labelled target polynucleotide molecules are bound using an excitation light reaching said surface through the support, in the presence of the solution containing the labelled target polynucleotide molecules thereby causing excitation of the said labelled target polynucleotide molecules,
   - detecting the light emitted from the said surface locations through said support;
e) analyzing the surface of the support in order to discriminate between the locations of the micro-array having bound targets and the locations deprived of target molecules wherein the discrimination is perfect so that no signal is attributed as positive signal to location(s) deprived of target molecules and to associate a positive signal value at the locations related to bound labelled target polynucleotide molecules;
f) Processing the signal value data obtained after or during at least one thermal cycle in order to detect and/or quantify the target polynucleotide molecule present in the solution during and/or before the amplification.

The invention further relates to a kit for detection and/or quantification of one or multiple polynucleotide target molecules being present in a solution by the analysis of a micro-array having immobilized capture molecules specific of said targets comprising:
a) an hybridization composition comprising:
   - a salt composed of a cation and an anion, wherein the said anion has preferably two carboxylic groups and one amine group, wherein the salt concentration in the composition is comprised between 10 mM and 400 mM and an exclusion agent from 1 % to 20% by weight,
   - a fluorescent label
   - a light absorbing agent which has an absorption band which overlaps the emission and/or absorption band of the fluorophore and is not a quencher molecule of said fluorescent label;
b) a (closed) device comprising:
   - a transparent solid support having refractive index higher than 1.33 and a thickness of at least 0.5 mm and better at least 3 mm and even better 5 mm with a surface that comprises at least four capture molecules present at particular locations on said solid support surface;
   - a chamber being formed on the surface of the said solid support covering the capture molecules having a thickness of 2 mm or lower;
c) a software system comprising program instruction for position configuration indicating the position of the grid point within said frame with the two dimensional array of grid comprising the same number of spots as the array and a data storage having the identification of the grid points according to their position information on the array and their corresponding target molecules.

### Description of the drawings

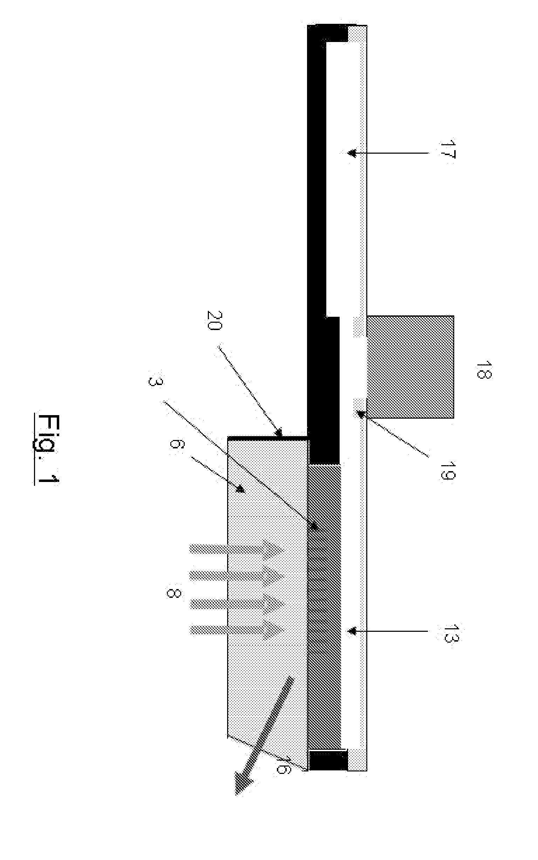

Figure 1 represents a preferred device for performing the present invention. The device comprises a filling inlet which is closable by a screwing cap (18). The device has a chamber having a thin cover (17) and an array chamber (13) comprising a transparent optical solid support (6) with a surface on which are bound the capture molecules (3). The bound target molecules are homogeneously illuminated by a light beam (8) through the optical support (6) and the emitted light is captured through a slightly tilted side surface (16). The opposite side surface (20) of the optical support is black. The device also contains spurs (19) between the two chambers and the inlet chamber.

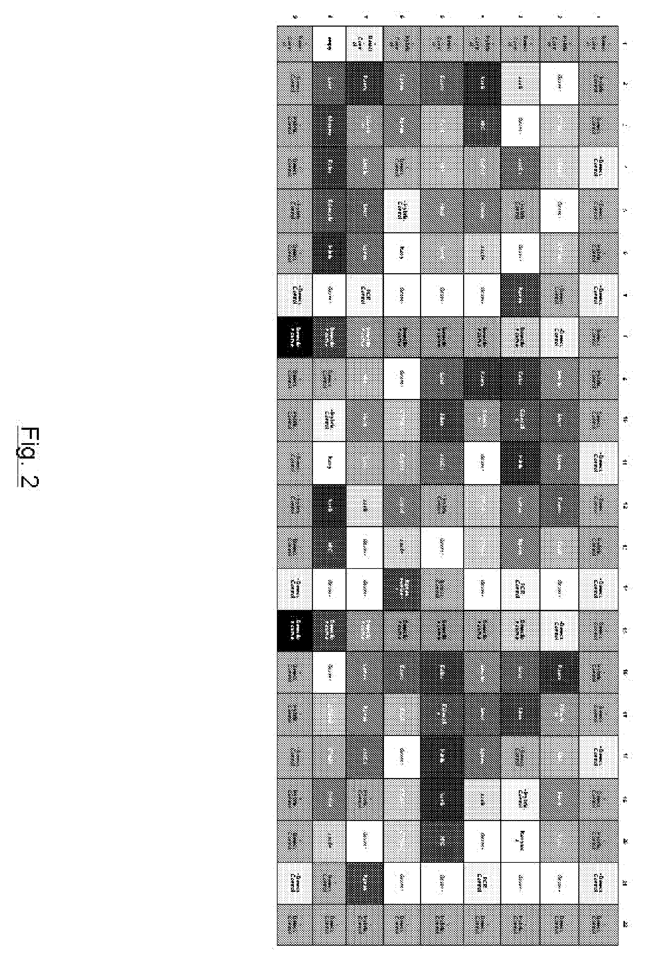

Figure 2 is the surface design of the array used in the experiment of example 1. The array (22 x 9 spots) comprises capture probes specific for the detection of 30 target genes being bacteria species and antibiotic resistance to be detected: aacA4, aacC1, aadB, CTXM1, CTXM2, CTXM9, KPC, MecA, OXA23, OXA58, VanA, VanB, VIM, A. baumanii, E. aerogenes, E. cloacae, E. coli, E. faecium, E. faecalis, H. influenze, K. oxytoca, K. pneumoniae, L. pneumoniae, P. aeruginosa, S. aureus, S. maltophilia, S. marcescens, S. pneumoniae, gram+ and gram-.
   The array also comprises controls: positive detection controls (Cy5 labelled polynucleotides), negative detection controls (spotting buffer), Positive hybridization control (polynucleotide capture molecule specific for GUT probe) and negative hybridization controls.

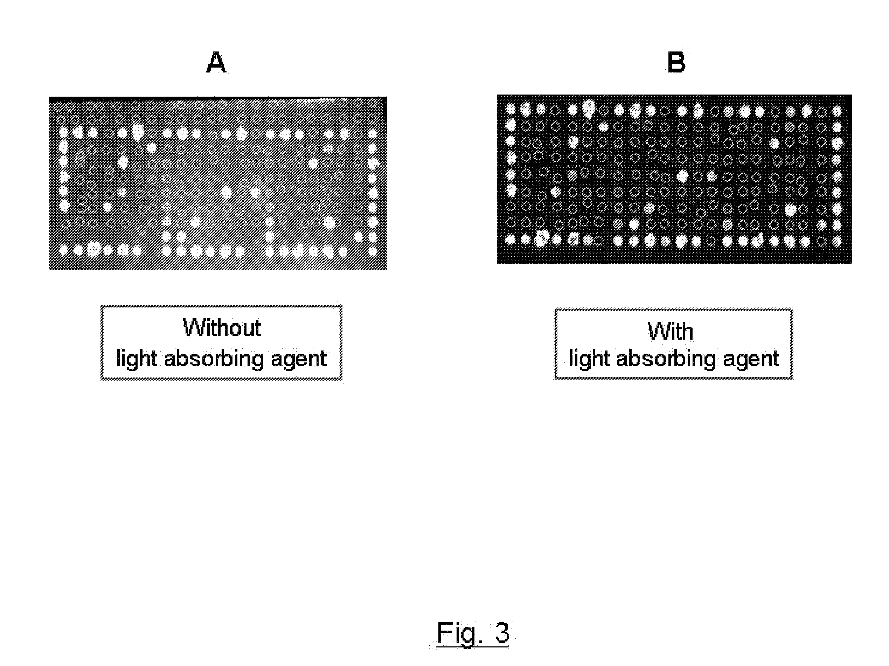

Figure 3 presents the image of the array and grid positioning after having performed the hybridization of two targets (being polynucleotide molecules) on an array in a close device having an optical support as described in figure 1. The fluorescent amplicons (MecA at 500 nM) and hybridization control (GUT at 20 nM) both labelled with Oyster645 were detected after 15 min hybridization at 58°C on specific capture polynucleotide probes and detected in the forbidden angle of the optical part of the device. The design of the array is provided in figure 2. The results in (A) provides a picture (digital image) of signals of the fluorescent targets bound to the capture probes on the array in presence of the solution containing the fluorescent target without light absorbing agent. The result in (B) represents an image of signals of the fluorescent targets bound to the capture probes on the array in presence of a solution containing the fluorescent target with light absorbing agent (Blue Dextran 4.5%). The automatic gridding of the images performed by the Filox software is represented on the images. We can observe that the gridding of the picture (A) does not correspond to the design of the array since the some capture probes were not covered by the grid.

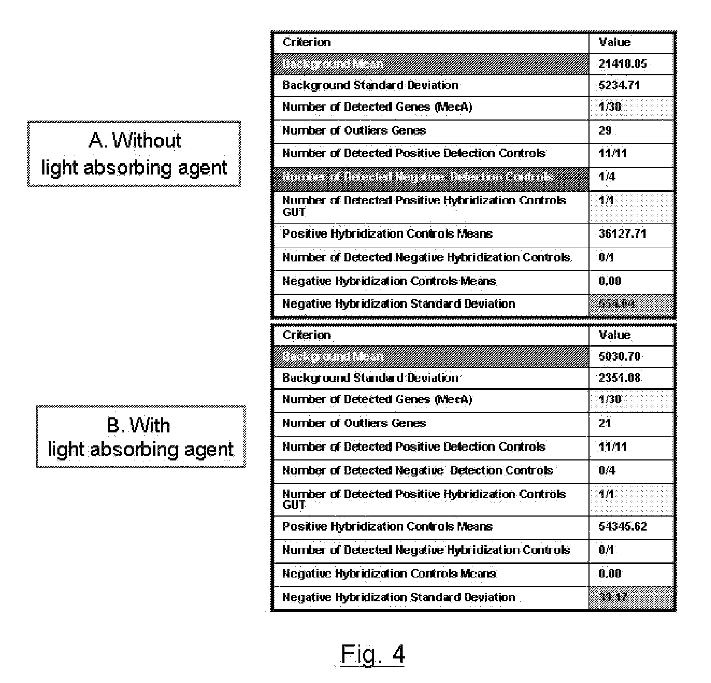

Figure 4 presents the analysis of the images obtained in figure 3. The upper Table represents data analysis performed by Filox software on the image of figure 3A (without light absorbing agent) and the bottom Table refers to image of figure 3B (with light absorbing agent). A manual positioning of the grid was done before performing the data analysis on the image of figure 3A. We can notice the presence of false positive spots (locations) in A on negative detection control and much higher values for the standard deviations.

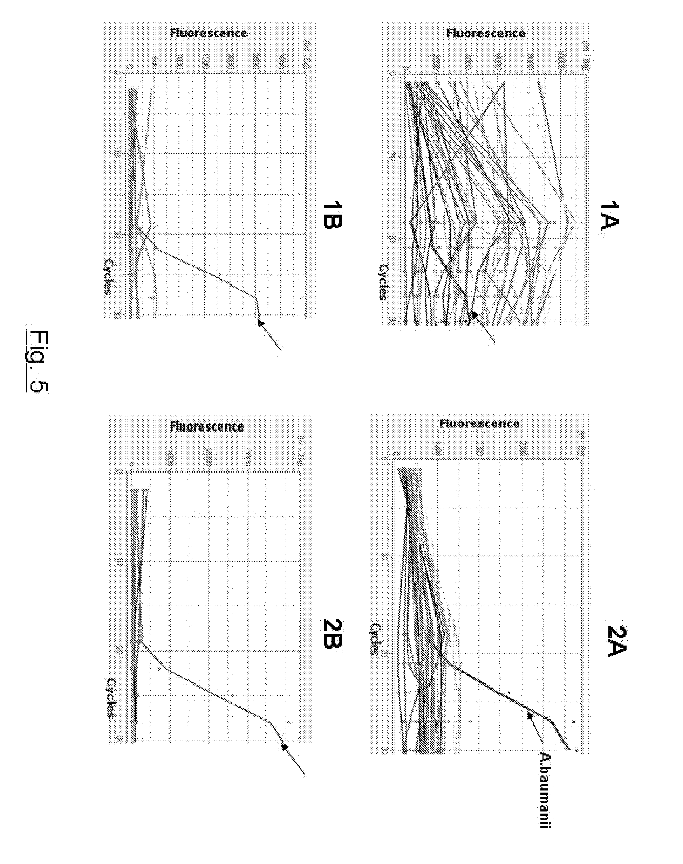

Figure 5 represents graphs of bound targets (being polynucleotide molecules) on an array in a close device having an optical support and in presence of the solution comprising fluorescent amplicons. The targets amplified by PCR and detected on the array is A. baumanii at 10⁶ copies which is labelled with Oyster645. Detection of the bound targets on the array was performed during the PCR at cycles 18, 21, 24, 27 and 30 on specific capture polynucleotide probes and detected in the forbidden angle of the optical part of the device. The PCR and detection were performed in the device of figure 1 and as described in example 4. The two PCR conditions compared are: (1A) the absence of light absorbing agent, (2A) the presence of light absorbing agents being Brilliant Black 0.025% and Blue Dextran 0.25%.

The graphs (1B) and (2B) represent detection is the same devices as 1A and 1B respectively but with the analysis being performed after having removed most of the solution from the array surface by centrifugation before making the detection (dry condition).

### Definitions

In the context of the present application and invention the following definitions apply:

As used herein, "biological target molecule" refers to a molecule having a composition that is found in biological compound, tissue, cells or organism mainly composed of nucleic acids or proteins. Nucleic acids include the DNA and the RNA molecules being polymeric molecules referred as polynucleotides. Protein is a polymeric molecule composed of amino acids. Protein molecules include antigens and antibodies. The term, "capture molecule" refers to a molecule, or complex or combination thereof, that is capable of specifically binding to one target molecule, or to a family of target molecules, or to one or more member (s) of a plurality of target molecules, or portion(s) thereof The capture molecules are preferably nucleic acids, which are either synthesized chemically in situ on the surface of the support or laid down thereon. Nucleic acid binding is achieved via base pairing between two polynucleotides, one being the immobilized capture molecule and the other one the target to be detected. Capture molecule also comprises derivative of the nucleic acid such as PNA or LNA or derivative as long as they can bind specifically the target polynucleotide molecule.

"Micro-array" means a support on which multiple capture molecules are immobilized in order to be able to bind to the given specific target molecule. The micro-array is preferentially composed of capture molecules present at specifically localized areas on the surface or within the support or on the substrate covering the support. A specifically localized area is the area of the surface which contains bound capture molecules specific for a determined target molecule. The localized areas (spots) are spatially organized preferably but not exclusively in a two dimensional pattern as for example a square or a rectangular. Other spatial shapes are possible like one line of spots or in a circular shape. Capture molecules are preferably polynucleotides or protein or chemical derivatives of the polynucleotides or of the protein which can bind specifically to the different target biological molecules to be detected in the assay. The specific localized area is either known by the method of building the micro-array or is defined during or after the detection. A spot is the area where specific target molecules are fixed on their capture molecules and seen by the detector. A spot is the area where specific target molecules are fixed on their capture molecules and seen by the detector. In one particular application of this invention, micro-arrays of capture molecules are also provided on different supports as long as the different supports contain specific capture molecules and may be distinguished from each other in order to be able to quantify the specific target molecules. This can be achieved by using a mixture of beads having particular features and being able to be recognized from each other in order to quantify the bound molecules. One bead or a population of beads is then considered as a spot having a capture molecule specific of one target molecule.

The terms "background" or "background signal intensity" refers to signals resulting from non-specific binding, or other non specific interactions, between the labelled molecules and components of the micro-array (e. g. the polynucleotide probes, control probes, the micro-array substrate, etc.). Background signals may also be produced by intrinsic fluorescence of the micro-array components themselves including the solid support such as the polymer material. A global background signal can be calculated for the entire micro-array, or different background signals may be calculated for each target nucleic acid. In a preferred embodiment, the background is calculated individually for each spot, being the level intensity of the signal on the surface surrounding the spot and not bearing the specific capture molecule. In another embodiment, the background is measured at the specific locations in the absence of specifically bound target.

The polynucleotide molecules of the invention are typically detected by detecting one or more "labels" attached to the polynucleotide molecule. The labels may be incorporated by any of a number of means well known to those of skill in the art, such as detailed in WO 99/32660, which is incorporated herein by way of reference. The label is detected directly preferably in fluorescence. The methods and kit of the invention preferably contain a "fluorescent label", for example a labelled nucleic acid primer or/and labelled deoxyribonucleotides. Polynucleotides also comprise derivative of the nucleic acid such as PNA or LNA or derivative bearing different chemical groups or substituent as long as they can bind specifically to the capture polynucleotide molecule.

The term "light absorbing agent" refers to a component, dye, pigment or colorant which absorbs light and does not reflect light. Light absorbance (UV, visible and infrared) is due to the interaction of the electromagnetic radiation with the atoms and molecules which causes the energy of the light to be converted into other forms of energy, usually heat. They usually appear as colored substances. The light absorption can be assayed by spectrophotometric measurement of the light and estimated by the optical density or the transmission. Typical light absorbing agent has an optical density of higher than 1 and even higher than 2 when tested with a light path of 1 cm at a given wavelength. In the present invention, the absorption band of the light absorbing agent is preferably overlaps the wavelength band of the excitation light and/or the emission light used for the detection of the target molecule preferably in the visible or infrared spectra. Preferably the light is absorbed in the 300 - 1000 nm range and preferably 400- 700 nm or in the light wavelength range ofthe emitted fluorescent dyes.

Light absorbing agent of the present invention excludes quenchers referring to molecules that are capable of reducing the emission from a fluorescent moiety by absorption of the excitation energy from the fluorophore. Such exclusion is for quencher effect of more than 10% and even more than 25 % and better more than 60%. The use of agents such as black BHQ-3 Amine which is a quencher of Cy5 dye is not suitable for the present invention because the emitted fluorescence of fluorescent dyes Cy5 is completely inhibited (quenched) in the solution but also on the support's locations as provided in example 4. Examples of quenchers are the Dabsyl (dimethylaminoazosulfonic acid) , Black Hole Quenchers ( Biosearch Technologies) or Qxl quenchers ( AnaSpec). Quenching is due to different mechanisms by which the energy of one molecule dye can be transferred nonradiatively to another molecule including energy transfer, the collisional energy transfer and the static quenching. (J. Lakowicz, Principles of fluorescence Spectroscopy 2nd edition . Plenum, New York, 1999, page 237).

The term "overlap the wavelength band" of the excitation light and/or the emission light means that the light absorbing agent has an absorption band which covers at least 50%, and better at least 80% and even better at least 90% of the excitation light and/or the emission light band..

The dyes are chemical molecules usually organic molecules which are found in the form of a liquid or which are soluble in the vehicle and also provide selective light wavelenght absorption. A "pigment" is generally an insoluble material including particle suspension that provides selective light wavelenght absorption.

Black pigments include carbon black, charcoal black, ebony, ivory black and onyx.

Carbon black is a material made of colloidal carbon produced by the incomplete combustion of heavy petroleum products such as FCC tar, coal tar, ethylene cracking tar, and a small amount from vegetable oil. Carbon black is a form of amorphous carbon that has a high surface area to volume ratio, and as such it is one of the first nanomaterials to find common use. It is presented under the form of spheres of carbon and aggregated spheres have dimension comprised between 1 to 1000 nm.

Carbon black is used as pigment in ink like Indian ink or less commonly called Chinese ink. Indian ink is obtained by the dispersion of carbon black in aqueous solution containing gelatin as additive.

Colorants either soluble or insoluble are used in the present invention as long as they absorb the excitation and/or the emission light of the solution. Examples of dyes which may be use the present invention are: food colorant, natural pigment from animals, Dextran modified with different molecular weights, carbon like structure (e.g. fullerene, nanotubes).

The term "volume exclusion agent" refers to water soluble, polymeric volume exclusion agents. The volume exclusion agents are polymeric, meaning that they typically comprise a plurality of repeating units, and generally have an average molecular weight of from about 1000 to about 2,000,000 daltons, with a molecular weight in the range of from about 10000 to about 100,000 daltons being preferred.

Useful classes of materials which can be used as volume exclusion agents in the practice of this invention include, but are not limited to, polyethers, reaction products of a simple sugar (such as dextrose or glucose) with epichlorohydrin, polysaccharides, polyacrylates and similar materials readily apparent to one skilled in the art.

According to the invention Dextran is preferred as volume exclusion agent. Dextran is a bacterial byproduct; the Dextran macromolecule consists of end-to-end linked glucan groups. Biosynthesis of Dextran has been demonstrated in numerous bacteria, especially in Streptococcus mutans, Leuconostoc mesenteroides ssp. Mesenteroides and Leuconostoc mesenteroides ssp. Dextranicum. Different molecular weights can be generated by limited hydrolysis and fractionation of the molecule. For example the native, high molecular Dextran (Mr 1.5 x 104 - 5 x 107), which is built up from α-D-glucose can be hydrolysed after a purification by precipitation with methanol or acetone under acid conditions at a temperatures of approx. 100 °C to molecular weight fractions in the range of 40.000 to 60.000 (Römpp, Lexikon der Biochemie und Molekularbiologie, Georg Thieme Verlag, Stuttgart, 2000).

The term "real time PCR" means a method which allows detecting and/or quantifying the presence of the amplicons during the PCR cycles. In the real time PCR, the presence of the amplicons is detected and/or quantified in at least one of the cycles of amplification. The signal related to the increase amount of amplicons formed during the PCR cycles is used for the detection and/or quantification of a given nucleotide sequence in the PCR solution.

The term "incident angle" represents the angle between a direction incident on a surface and normal to the surface at the point of incidence. In the present invention, the incident angle is considered in(side) the support since the emitted light is detected when going through the support.

The term "critical angle" in the present invention is the angle in the support relative to the normal versus the solid support surface defined by θ_{c}= sin⁻¹(n₂/n₁), where n₁ is the refractive index of the solid support and n₂ is the refractive index of the outside. In the present invention, n₂ is preferably a water solution (n₂~1.33) or air (n₂~1). The critical angle is the value of the incidence angle at which total internal reflection in the support occurs. The critical angle can be calculated and expressed in radians in the same way.

The term "observation angle" (θobin) is the angle used for the observation of the emitted light and is expressed relative to the normal in the support versus the solid support surface bearing the target molecules.

The θobout is the observation angle for the detection device located outside the support.

The "forbidden angle" of the invention is an angle comprised between a critical angle and 90° for a light beam of a wavelength corresponding to the emitted light in the support.

The term "evanescent wave coupling" or "evanescent coupling" is a process by which electromagnetic waves are transmitted from one medium to another medium by means of the evanescent (or decaying) electromagnetic field(s).

An "evanescent field" or "evanescent wave" is used herein with its commonly understood meaning, i.e., refers to an exponentially decaying electromagnetic field generated on the far or distal side of a totally internally reflecting interface that is illuminated by an incident light source. Generally, the excitation energy of the evanescent wave is the same as the energy of the wavelength of the incident light that was totally internally reflected. Typically, the evanescent field propagates with significant energy for only a relatively short distance from the distal surface of the interface (e.g., on the order of magnitude of its wavelength).

The term "emitted evanescence" or "reverse evanescence" is the reverse of induced evanescence, i.e. the process by which light emitted from objects very close (within one or few wavelengths) to the far side of a totally reflecting surface (outside the support) can be transmitted to the near side (inside the support).

### Detailed description of the invention

The invention is based on the unexpected finding that simple addition of a light absorbing agent added in a solution where fluorescent targets are present allows perfect analysis of array surface on which the targets are bound when the detection is performed by a physical method which allows to discriminate between the signal coming from the array surface from the signal coming from the solution. The present invention avoids the false positive results and provides an array image that is easily recognized by appropriate software for automatic gridding of the array spots.

Microarrays detection constraints are very high since the amount of target bound to its capture probe is very small relative to the target amount present in the solution. The spots have as little as 10⁻¹⁵ to 10⁻²⁰ moles of target bound per location (spot) while the target concentration in solution can be as high as 10⁻⁹ moles. In the present invention, differentiation of the signal from bound or not bound target is obtained by one of the physical detection methods which allows the differentiation of the signals of the surface bound target from the targets present in the solution but the surface analysis of the array is however not perfect and the difficulty which is solved in the present invention is to have a perfect differentiation between specific signals present in particular locations from other non specific signals in locations deprived of target molecules so as to identify a signal which is really associated with the presence of specific identifiable target.

The invention is applicable to a wide range of target molecules being preferably nucleic acids and protein. In such a method, there is not need of washing steps to remove the unbound targets which are labelled for the detection. This invention allows easy and rapid online detection of multiple biological targets present in a solution and is suitable to many applications. One of them is to follow in real time the amplification of polynucleotide so as to obtain a real time PCR (qPCR).

Online detection means that the binding of the target onto its capture molecule is followed by detection and/or quantification of at least 2 signals from the same location at different time frames.

The capture molecules are preferably polynucleotide molecules having their full sequence or part of their sequence complementary to some part of the target polynucleotide molecule to be detected and still preferably amplified polynucleotide molecules.

In a preferred embodiment, the image characteristics values are perfectly computed. The image characteristics values are computed using a software based system preferably which includes receiving a frame of image information including a plurality of spaced DNA spot images corresponding to the plurality of spots, said image information including image intensity level information corresponding to said spots, selecting a set of image information within said frame including a selected set of spot images, generating a grid including a plurality of spaced grids points corresponding to said selected spot images, each grid point including position information indicating the position of the grid point within said frame, modifying a current position of at least one grid point corresponding to a spot image in said selected image to shift said grid point toward the corresponding spot image. The present invention allows perfect spatial determination of spot deposition on the surface of the support which is recognized by a theoretical grid comprising the same number of spots in the X and Y coordinates as the array.

In another embodiment, the spatial determination of the spot deposition on the surface of the support being recognized by a two dimensional grid comprising the same number of spots as the array is perfect. The two dimensional grid is a grid which comprised preferably the positions of the locations in rows and columns or/and in X/Y coordinates.

Further processing of the image analysis for quantification of the signal present on the spots is performed using a software based system preferably by segmenting the selected set of image information by selecting at least one image segment defining a segment area around a grid point and including a spot image with minimum distance from said grid point and quantifying at least a portion of image information in said image segment to obtain image characteristic values for said image segment wherein the image characteristic values include target information for a spot corresponding to the target spot image in said image segment said target information including target values. Example of software for spatial analysis of arrays is described in US-P-6,577,956.

Also in a preferred embodiment, the light absorbing agent concentration is optimized so that the number of signals attributed as positive signals to location(s) deprived of capture molecules locations is less than 5 and better less than 2 and even better is zero. The reduction depends on the concentration of the light absorbing agent used in the solution. The concentration of the light absorbing agent is preferably of at least 0.1%, better at least 0.5% and even better at least 1%.

Preferably, the mean signal of the surface locations of the micro-array having bound targets is at least 2 times and better 5 times and even better 10 times higher than the mean signal of the location having deprived of capture molecules.

In still another preferred embodiment, the mean signal of the surface locations deprived of capture molecules is decreased by a factor of at least 1.4, better at least 2 and even better at least 5 in the presence of the light absorbing agent in the solution than in its absence.

Also preferably, the amount of target in a bound location is lower than 100 times and even lower than 1000 times and even lower than 10,000 times the amount of target being in the solution so that sufficient target can be incorporated into the solution for reaction on its specific capture molecules.

In a preferred embodiment, the light absorbing agent has an absorption band which overlaps the excitation and/or the emission light wavelength band used for the detection of the labelled target molecules. Examples of preferred dyes according to the invention and their properties are presented in Tables 1 and 2. Preferably the light absorbing agent is one or a mixture of the agent(s) listed in Table 1 and still preferably Black Brilliant, Black Intense, Brilliant Blue, Blue Dextran, Melanine, E132, Brown Magnetic Beads. In a particular embodiment, the light absorbing agent is chemically grafted to a volume exclusion agent. Preferably, the light absorbing agent does not bind to the labelled target molecule nor to the capture molecules

In another embodiment, the absorption band of the light absorbing agent is comprised between 300 and 1000 nm, preferably between 400 and 700 nm (visible spectrum). In a preferred embodiment, the light absorbing agent is chosen with an absorption band which overlaps the 500-600 nm range. In still another embodiment, the absorption band overlaps the 600-700 nm range.

In a preferred embodiment, the optical density (OD) of the light absorbing agent present in solution at 1% is at least 1 and better 2 when assayed in standard conditions at the wavelength of the excitation light and/or at the wavelength of the emission light.

The preferred light absorbing agents are black dyes or black pigments that do not emit or reflect light in any part of the visible spectrum. They absorb all frequencies of the visible light and so overlap all the excitation and emission light bands. Alternatively a combination of pigments or dyes may be used as long as the resulting absorption band overlaps the excitation and the emission light wavelength band used in the assay.

Preferably, the light absorbing agent considered for use in the present invention were selected from dyes or pigments based on the following criteria: their solubility in aqueous solution, having a high molecular extinction coefficient at the emission and/or excitation wavelength, are not fluorescent in the emission wavelength, do not interfere with binding between capture and target molecules (hybridization reaction, protein binding assays, etc.). Possible interference with the binding is observed for high concentrations of dye. It is preferable to perform a concentration curve of the dye to choose the concentration which gives the best condition to avoid false negatives while having no or a minimum effect on the specific signal.

In addition, the light absorbing agent is used in real time PCR as long as the concentration used does not interfere with PCR (no inhibition of the DNA polymerase). Preferred light absorbing agents are among , Black Intense, Blue Dextran, Black Brilliant, Blue Intense and E133. and suitable concentrations the DNA polymerase). Preferably the light absorbing agent concentrations are not higher than the values presented in Table 2. preferably the concentration is lower than 0.5 and even lower than 0.1 %.

Advantageously, the light absorbing agent contributes to increase the binding reaction between capture and target molecules. Preferably the light absorbing agent is chemically grafted or linked to a volume exclusion agent so as to reduce the water available and indirectly increases the concentration of target molecule in the reactive solution and affects positively the kinetics of fixation of the targets onto their capture molecules. The same effect applies for PCR, where the presence of an exclusion agent reduces the water available for primers and reagents and indirectly increases the concentration of primers in a reactive solution. The combination of both molecules was found particularly efficient in both the reduction of the fluorescence and the increase of the reaction but moreover it was found to reduce the inhibition effect of the dye onto the binding and/or onto the PCR reaction so that higher concentration of dyes could be used with higher efficiency of fluorescence reduction. Light absorbing agent fixed onto a volume exclusion agent are either found commercially or synthesised. They include but not limited to Blue Dextran, Reactive Blue 4-Agarose (Signa-Aldrich, St Louis, Missouri US) Synthesis of dyes having chloride function such as Cibacron Blue 3G-A, Reactive blue 4 or Mordant Blue 9 (Sigma-Aldrich, St Louis, Missouri US) onto Dextran or other carbohydrate polymers are preferably performed according to Viet et al 2008 (Carbohydrate polymer 74, 372-378). Other dyes can also be fixed onto Dextran in a more complex synthesis protocol.

In a preferred embodiment, the light absorbing agent does not emit fluorescent light at the emission wavelength of the labelled target molecules. This concept is exemplified in Table 1. The dye Azure A is a good example. It can be used for the reduction of the fluorescence of a solution at the excitation/emission wavelength of 532/570 (green channel). At the emission wavelength of 570 nm, Azure A dye does not fluoresce. However, the dye is fluorescent at the emission wavelength of 666 nm used in the red channel.

The dye Azure A is thus not capable of reducing the fluorescent of the solution beyond the intrinsic fluorescence of the light absorbing agent at the emission wavelength in the red channel. In presence of this agent, the fluorescence is about 38% (data not shown) the fluorescence value of the solution in the absence of light absorbing agent (= 100%). This is also true for E133 which shows a basal fluorescence and thus is not capable of reducing the fluorescent of the solution beyond a limit corresponding to its intrinsic fluorescence value at this particular emission wavelength (not shown).

The target molecule is preferably labelled with a fluorescent dye. In a preferred embodiment, the fluorescent dye has a stoke shift of at least 20 and even better 50 and better at least 100 nm between excitation and emission maximum wavelength. Advantageously, the light absorbing agent has the property to reduce the bleaching of the fluorescent dye in solution. This property is of high interest since it allows repeated binding and detection assays without affecting the fluorescent emission of the dye.

Moreover it was found that the present invention also protects from the bleaching of fluorescently labelled capture molecules used as detection control. This property is advantageously used in the present invention for obtaining reliable detection control and/or for performing a detection curve which is independent of the illumination exposure time. Preferably the detection method gives a signal which is identical ( within the standard deviation) for the assay of a fixed amount of bound target molecule when detected after 1 min and even 5 min illumination of the device.

In a preferred embodiment, the light absorbing agent does not bind to the labelled target molecule nor to the capture molecules so that the light absorbing agent does not reduce the binding of the labelled target molecules on their capture molecules.

In still another embodiment, the light absorbing agent is used at a concentration that does not reduce the signal of the bound target by more than 50% and better by more than 25 % and even by more than 10% when compared in the absence of the agent.

In still a preferred embodiment, the light absorbing agent is used at a concentration which does not reduce the binding of the labelled target molecules on their capture molecules by more than 50% and better more than 20% and even better more than 10%.

In still a preferred embodiment, the light absorbing agent does not inhibit the efficiency of the PCR performed in the solution. Inhibition means less than 50% and better less than 20 % and even less than 10% of the PCR performed in the absence of the light absorbing agent.

The capture molecules are immobilized on a transparent solid support in particular locations or spots. Preferably multiple capture molecules are immobilized in particular locations in the form of a micro-array having at least 10, better at least 40 and even better at least 100 different locations (spots) per cm². Preferably, the surface of the support is illuminated homogeneously over said at least four different capture molecules immobilized in particular locations (spots), thereby causing homogeneous excitation of the labelled target molecules bound to the said capture molecules.

In a preferred embodiment, the light emitted from the surface of the support is simultaneously detected in at least four different locations and a spatially discriminated image of said at least four different locations is obtained, onto the surface of a detector, being preferably a CCD camera. Alternatively, the image is made by scanning the surface of the support.

In another embodiment, the image may be further processed to discriminate said at least 4 different locations (spots) having bound different target molecules. Preferably, a two dimensions image of the surface of the support (having different locations with bound targets) is in focus and is projected at once onto a detector surface so that pixels data are associated to the different locations having bound targets.

Advantageously, the background signal on the surface having the array is more homogeneous in presence of light absorbing agent than in its absence.

Advantageously, in the method and kit of the invention, the light emitted from the location (having fixed the target compound) is detected through the transparent solid support by means of a physical method which differentiates the light emitted from the said surface locations from light emitted from the solution.

The present invention applies to physical methods of detection which differentiate the signal from bound or not bound target so as to allow differentiation of the signals of the surface bound target from the targets present in the solution. Preferably the illumination of the surface support and detection of the light emitted are performed by a physical method which differentiates the signal from surface bound target molecules from other target molecules present in the solution.

In a preferred embodiment, the light emitted from the surface locations through said support is detected in an angle being a forbidden angle, which differentiates the light emitted from the excited labelled target molecules bound at the said surface locations from the light emitted from the excited labelled target molecules present in the solution. More particularly, the light emitted from the surface locations where labelled target molecules are bound is collected through a side of said support which is inclined relative to the surface of the support on which the target molecules are bound by a lens and focused on a detector surface which is positioned at an observation angle θobin relative to the normal to the said solid support surface in the support, such that 90o > θobin > sin-1 (n2/n1), with n1 being the refractive index of the transparent solid support and n2 the refractive index of the target molecule solution, whereby n1 > n2. Further details on the physical method allowing the discrimination between the light emitted from the excited labelled target molecules bound at the said surface locations from the light emitted from the excited labelled target molecules present in the solution, are disclosed in EP 2017354A1. In particular, the transparent solid support on which the capture molecules are bound has a transparent side which is inclined relative to the surface of the support on which the capture molecules are bound, and is used for collecting the light emitted from the location of the capture molecules in the forbidden angle (θobin) and inclined by an angle of between 90 and 60° compared to the solid support surface.

Advantageously, as provided in figure 2, the combination of the forbidden angle detection mode and the use of light absorbing agent in the solution comprising a labelled target (figure 2), improves the gridding of the array and the removal of false positive signal locations (figure 3).

Figure 1 describes a typical device for the detection in the forbidden angle which was used in the present invention and to obtain the results of example 1. The device was constructed according to the specifications which are presented in the application EP 2017354A1 cited here for reference. The device has a thin chamber (17) and an array chamber (13) comprising a transparent optical solid support (6) and a surface on which are bound the capture molecules (3). Thin chamber means a chamber having a thin wall. The bound target molecules are homogeneously illuminated by a light beam (8) through the optical support (6) and the emitted light is capture through a slightly tilted side surface (16). The optical support (6) has a thickness, suitable for detection of amplification products along an observation angle θobin relative to the normal to the said optical support surface, such that 90° > θobin > sin⁻¹ (n2/n1). The solid support had a refractive index (n1) of 1.5 which is higher than the refractive index (n2) of 1.33 of aqueous solution. The critical angle θ_{c} was 62.4° in the present device and the θobin was greater than 62.4°. The solid support is illuminated by a light beam (8) from a light source (not shown). Signal from bound target molecules is measured with a CCD camera located on the side of the transparent solid support (6) bearing the capture molecules in the support (3). The camera is located in an angle θc out measured relative to the normal of the support according to the formula presented in EP 2017354A1.

In another preferred embodiment, the excitation of the bound labelled target molecules is obtained by evanescence light. Labelled target molecules bound at the surface locations is excited by evanescence light. Evanescence excitation is a physical method which differentiates the light emitted from the excited labelled target molecules bound at the said surface locations from the light emitted from the excited labelled target molecules present in the solution, is evanescence induced fluorescence. The fluorescent labelled targets immobilized on the surface of the support are excited by evanescence wave present at the interface between the solid support and the solution while the targets in the solution are not subjected to the excitation. In this way, the method differentiates between the excited target bound at the surface locations from light emitted from the excited target present in the solution. Instruments for the evanescence detection on micro-arrays of polynucleotides or protein are available but not limited to the Port Array 5000 (Aurora Photonics Lake Barrington, Ill, US) or the LS Reloaded (Tecan, Mannedorf, Switzerland)

Preferably, the detection of the target molecules bound onto the surface of the solid support is performed by detecting the light emitted from the surface location through the support by Total Internal Reflection (TIR) of the excitation light.

The illumination is such as to obtain Total Internal reflection fluorescence (TIRF) and homogeneous evanescent field on the surface of the solid support having capture molecules immobilized thereon.

In a preferred embodiment of the method of the invention, the evanescent field is generated by an incident light source illuminating the side of the solid support. Preferably, the light source is non collimated laser source or a light emitting diode conducted by a pair of optical fibre bundles.

In another embodiment, the side of the solid support forms an angle of about 90° with the surface of the solid support. The top and the bottom surface of the solid support should be parallel, or close to parallel as necessary to generate an evanescent wave.

In an alternative embodiment, the side of the solid support forms an angle comprised between about 90° and 110° with the surface of the solid support. Preferably, the side of the solid support forms the edge of a flat prism.

In a preferred embodiment, the evanescent field is generated by an incident light source illuminating the surface of the solid support with an incidence angle comprised between about 10° and 90° and preferably between about 60° and 90°. Preferably the incidence angle is adjustable.

In another preferred embodiment, the evanescent field excites the label of the labelled amplicons and emitted signal is detected by a detector. Preferably the detector comprises a CCD camera. In another embodiment, the detector comprises a photomultiplier.

In a preferred embodiment, the incident light source, the solid support and the detector are not moving relative to each other. This is the simplest system. The CCD camera collects the light emitted from the solid support surface in a single acquisition

In another embodiment, the incident light source is moving relative to the solid support and the detector is not moving. Preferably the solid support is moving laterally and/or longitudinally relative to the incident light source. Preferably, the incident light source is moving laterally relative to the solid support. The light source is preferably a laser beam scanning the surface of the solid support.

In an alternative embodiment, the incident light source is moving relative to the detector and the solid support is not moving. Preferably the detector is moving synchronically relative to the incident light source.

In still another embodiment, the illumination of labelled target molecules bound at the surface locations are detected by scanning, with the excitation light being focused on the surface of the support with a focal plane of 1 mm or less. The focal or confocal scanning is a physical method based on an excitation light focused onto the surface of the solid support for increasing the discrimination between the bound and not bound targets. In the confocal scanner, the instrument also differentiates between the light emitted from the surface from the light emitted from the solution by selection of the light emitted from the surface by focusing the emitted light in a pin hole. One experimental method for doing such direct assay according to the present invention is described in the WO 06/053769 and the device in the figure 3. Currently, the confocal scanners are used to read a dry array surface. Unexpectedly, the presence of light absorbing agent allows performing the detection of bound target in the presence of the target being in the solution in direct confocal scanning.

In still another embodiment, the excitation light is a beam focused through the solid support onto the surface bearing the bound target of a moving support having preferably a the dimension of a microscopic slide , or a disc shape or a CD or a DVD.

In another embodiment, the physical method which differentiates the light emitted from the excited labelled target molecules bound at the said surface locations from the light emitted from the excited labelled target molecules present in the solution is scanning, with the excitation light being focused on the surface of the support with a focal plane of 1 mm or less, better of 100 µm or less or event better of 10 µm or even less.

Preferably, the emitted light is collected through the support at an angle which is closed to the normal (perpendicular) of the support surface, preferably at an angle comprised between 80 and 100° with said support surface.

When using scanning detection mode, the concentration of the light absorbing agent in the solution is preferably of at least 0.1%, better at least 1% and even better at least 2 % in weight.

The method and kit of the invention are particularly suitable for binding reaction (between target and capture molecules) occurring at high temperature such as temperatures required for hybridization between two polynucleotide sequences or even for PCR amplification. For those applications, the surface of said solid support is maintained flat at temperature higher than 85°C and wherein said support shows a low self-fluorescence at the wavelength of excitation and emission used for the detection of the target molecule.

Preferably, the labelled target molecule is a polynucleotide including the DNA or RNA or copies thereof. In still another embodiment, the labelled target is a protein and the capture molecule is a protein preferably an antibody or part of the antibody which specifically binds the target protein. Antibodies are monoclonal or polyclonal antibodies. Parts of antibodies are for example F(ab) fragments or part of the variable part of the light and/or the heavy chain of the antibodies. Examples of the use of microarray spotted with antibodies for the detection of target antigens are the cytokine array as described in EP 01536231). Other capture molecules are but not limited to aptamers. In another preferred embodiment, the antigen is immobilized in localized area and the antibody is present in the solution and is detected. In a preferred embodiment, the assay is a one step detection of an antigen present in a sample by performing a competitive assay in the presence of labelled antigen incorporated into the assay and the capture molecule is an antibody or a protein or compound which binds specifically the antigen. In another application, the antibodies are detected in a sample by the use of antigens or appropriate protein having the same epitope immobilized onto the solid support.

In still another embodiment, the capture molecules are polynucleotides and the targets are proteins that recognized a specific sequence of the polynucleotide. Examples of such detection array are the detection of transcriptional factors (US 7,407,748).

In a preferred embodiment, the labelled target molecules result from an amplification of a polynucleotide molecule performed in the same solution as the detection and/or quantification of the said labelled target molecules. The fluorophore is preferably incorporated into the polynucleotide as a fluorescent label attached to a precursor during the synthesis of the polynucleotides. The label precursors are preferably the primers or a dNTP.

Preferably, the method of detection of the amplified labelled target has the feature described here above for the analysis of array having bound targets.

In a preferred embodiment of the method of the invention, the polynucleotide molecule solution is submitted to an amplification performed together with the detection of the amplified target according to the present invention. Preferably, the amplification and the detection are performed in the same closed device.

The amplification used in the method according to the invention is advantageously obtained by well known amplification protocols, preferably selected but not limited from the group consisting of PCR and RT-PCR (US 4,683,195 and 4,683,202), ligase chain reaction (LCR) (Wu and Wallace, 1989 Genomics 4:560-569) or the Cycling Probe Reaction (CPR) (US 5,011,769),, NASBA ( EP0629706) and isothermal amplification ( WO2009102896, WO2009049630, WO2009072705, WO2008086381, WO09623904, US2009130677, WO2007030505, WO2006087574, US2006166250, US2003165917, WO0028084)

In a preferred embodiment of the method and kit of the invention, the target molecule solution is submitted to temperature cycles having at least 2 and preferably 3 different temperatures in order to obtain amplification cycles preferably a PCR. The concentration of the light absorbing agent is chosen to keep the DNA polymerase in an active form.

In a preferred embodiment, the present invention is used for performing the detection of the amplified targets during the PCR in at least 5 cycles and even better 10 cycles in order to obtain a detection curve along with the cycles. Preferably, the real-time PCR is performed with the amplification solution being in contact with the capture molecules during all the PCR steps and the detection. In a preferred embodiment, the labelled target molecules are polynucleotides resulting from an amplification of a polynucleotide molecule performed in the same solution and in the same device as the detection and/or quantification ofthe labelled target molecules.

Amplification and detection in the same device with the same solution without washing strongly simplifies the assay of real time PCR since the overall process does not need any liquid handling and movement thus allowing the assay to be performed in a single closed cell. Moreover the process can be multiplexed by having at least 5 solid supports and the chambers present attached to each other. Preferably the multiple devices are in the form of a strip or in a multi-well format. Strip of well or chamber or multi-wells like 96-well format for performing the multiplex Real time PCR in parallel on multiple target for each well is one of the preferred application of the present invention which was not done nor suggested earlier.

In a preferred embodiment, the transparent solid support has multiple capture molecules immobilized in particular surface locations in the form of a micro-array having at least four different locations per cm², said capture molecules being able to specifically bind four different target polynucleotide molecules being amplified in the same solution. Also preferably the number of spots on the array is at least 5 and better 10 and even 20 so that at least 5 or even 10 and even better 20 different targets are possibly amplified and detected simultaneously.

One advantage of the real time PCR is the speed of detection and the quantification obtained not based on the absolute level of the signal related to the amplicons but to the cycle number necessary for crossing a particular threshold (see here under).

In a preferred embodiment, the detection is performed by one of the physical methods described here above in the patent which differentiate the signal coming from the support surface from the signal coming from the solution, preferably measuring the signal emitted in the forbidden angle, using the evanescence illumination, the TIRF or the focal scanning. In a preferred embodiment, the emitted light during the real time PCR amplification is collected in a forbidden angle as disclosed in EP 2017354A1, so that the detected light is only originated from the surface.

Advantageously, the method of the invention does not require the use different fluorescent dyes to quantify different nucleotide molecules. One fluorescent dye is sufficient for the quantification of multiple different nucleotide molecules because of their specific binding by hybridization on capture molecules being specific of each target nucleotide sequence and being localized in distinct areas of the micro-array. For example, a nucleotide molecule is amplified together with another nucleotide molecule using the same or different primers and both amplicons are labelled with the same fluorescent dye. The different amplicons are detected and/or quantified on separated capture molecules without the need of several fluorescent dyes as required in the real time PCR performed in homogeneous phase.

Another feature of the association of the **PCR** with detection on array is its great specificity. A first specificity level is obtained through the annealing of the primers and a second level of specificity is obtained by the hybridization on the capture molecules. Such double specificity increases very much the specificity of the final detection which is often required for analysis in complex biological sample. Another advantage is that primer dimers or non specific amplified product formed during the **PCR** amplification will not generate signal on the micro-array since there is no complementary capture molecules for the primers nor for unspecific products. The specificity can still be increased by the use of different capture molecules for the same target nucleotide molecule. Two or more capture molecules can be designed to bind the same strand or one capture probe will bind the sense strand of the amplified product and another capture molecule the antisense strand.

In another embodiment, standards nucleotide sequences are incorporated into the tested solution and the standards are amplified with the same primers as the target nucleotide sequences.

The capture molecules are attached preferably by covalent link on the support or substrate present on the support. In another embodiment, the capture molecules are adsorbed on the support as long as they are not significantly released in solution during the PCR cycles.

Deposition of the capture probe is preferentially done with physical means such as pin or "pin and ring" touching the surface, or by release of a micro-droplet of solution by methods such as piezo or nanodispenser. Alternatively*, in situ* synthesis of capture molecules is one of the invention's embodiments with light spatial resolution of the synthesis of oligonucleotides or polynucleotides in known locations such as provided by 5,744,305 and 6,346,413.

In another embodiment the nucleotide molecules are DNA present in a biological sample. The DNA is extracted from the sample and amplified by PCR and the amplicons are detected online by their fixation on their specific capture molecules.

According to the invention, the transparent solid support for the micro-array is preferably selected from the group consisting of glass, metallic supports, polymeric supports (preferably thermo-resistant having low self-fluorescence) or any other support used in the microchips (or micro-arrays) technology (preferably activated glass bearing aldehyde or epoxide or acrylate groups), said support comprising also specific coatings, markers or devices (bar codes, electronic devices, etc.) for improving the assay.

In a preferred embodiment, the support contains a substrate on which are fixed the capture molecules.

If glass presents many advantages (like being inert and having a low self-fluorescence), other supports like polymers, with various chemically well-defined groups at their surface, allowing the binding of the nucleotide sequences are useful. In another preferred embodiment, the support bearing the capture molecules has a 3 dimensional porous structure. Conventional glass slides have less than 60% silicon dioxide on their surface. This inherently limits the amount of chemical bonding available on the surface. Porous material exhibits increased loading capacity of capture molecules. Typical porous supports are gel pads, fused-fibre matrix, fibrous polymer matrix. The array can be constructed entirely of the porous material, or can comprise a layer of porous material mounted on top of a flat surface such as glass, plastic, or metal.

In the preferred embodiment, the polynucleotides being used as capture molecules are present on the micro-array particular location at a density superior to 10 fmoles, and preferably 100 fmoles per cm² surface of the solid support.

The micro-array according to this invention contains between 4 and 100000 spots per cm² and preferably between 20 and 1000 spots per cm², each spot being the particular location for one capture molecule. Miniaturization allows performing one assay onto a surface (usually circular spots of about 0.1 to about 1 mm diameter). A low density array, containing 20 to 400 spots is easily obtained with pins of 0.25 mm at low cost. Higher density of spots going to 1,600 spots per cm2 can be obtained by reducing the size of the spots for example to 0.15 mm. Method for obtaining capture molecules of higher density have been described earlier as in US 5,445,934. Miniaturization of the spot size allows obtaining a high number of data which can be obtained and analyzed simultaneously, the possibility to perform replicates and the small amount of biological sample necessary for the assay. Miniaturization for detection on micro-arrays is preferably associated with microfluidic substrate for separation, extraction of nucleotide molecules from the cell extract.

In a preferred embodiment, the particular location is comprised between about 10 µm² and about 1 mm² and preferably between about 1 µm² and about 100 um².

In one preferred embodiment, the capture molecules present on the micro-array are complementary to at least one part of the sequence of amplified target nucleotide sequence present in solution. The capture molecules comprise a nucleotide sequence which is able to specifically bind the amplified target nucleotide sequence, said specific nucleotide sequence is also preferably separated from the surface of the solid support by a spacer arm of at least about 6.8 nm or 20 nucleotides in a double stranded form which has no binding affinity for the amplified target molecule. In a preferred embodiment, the capture molecule is a single stranded polynucleotide containing a sequence able to specifically bind the labelled target nucleotide molecule and a spacer of at least 20 nucleotides and better more than 90 nucleotides. The spacer part can be either single or double stranded DNA.

In a preferred embodiment the probe sequence specific for the target binding is comprised between 15 and 100 nucleotides and more preferably between 15 and 35 nucleotides

Detectable labels suitable for use in the present invention include any composition detectable by electromagnetic light emission. In an embodiment, the target molecules are labelled with a fluorescent dye. The fluorescent label can be incorporated into the target by enzymatic or chemical reaction. Typical enzyme reaction includes the incorporation of nucleotide analogues into the target. Alternatively, primers labelled at their 5' end with a fluorescent dye can be incorporated into the target. Fluorochromes can also be incorporated into the targets by chemical reaction such as the reaction of fluorescent dye bearing a N-hydroxysuccinimide (NHS) group with amines groups of the targets. Useful fluorescent dyes in the present invention include cyanine dyes (Cy3, Cy5, Cy7), fluorescein, texas red, rhodamine, green fluorescent protein or Alexa dyes (Invitrogen, Carlsbad, Ca. USA), Oyster (DeNovo Biolabels GmbH, Heideleberg, Germany).

The preferred labels are fluorochromes which are detected with high sensitivity with fluorescent detector. Fluorochromes include but are not limited to cyanin dyes (Cy3, Cy5 and Cy7) suitable for analyzing arrays by using commercially available array scanners (as available from, for example, General Scanning, Genetic Microsystem). Preferably, the excitation wavelength for cyanin 3 is comprised between 540 and 558 nm with a maximum at 550 nm, and the emission wavelength is comprised between 562 and 580 nm with a maximum at 570 nm.

Preferably, the excitation wavelength for cyanin 3 is comprised between 540 and 558 nm with a maximum at 550 nm, and the emission wavelength is comprised between 562 and 580 nm with a maximum at 570 nm.

Preferably, the excitation wavelength for cyanin 5 is comprised between 639 and 659 nm with a maximum at 649 nm, and the emission wavelength is comprised between 665 and 685 nm with a maximum at 670 nm. Preferably, the excitation wavelength for cyanin 7 is comprised between 733 and 753 nm with a maximum at 743 nm, and the emission wavelength is comprised between 757 and 777 nm with a maximum at 767 nm. Preferably, the excitation wavelength for Oyster645 is comprised between 627 and 660 nm with a peak at 645 nm and the emission wavelength is comprised between 647 and 685 nm with a peak at 666 nm.

In a preferred embodiment, the reagents for nucleotide molecule amplification comprise a primer pair, dNTPs, a thermostable DNA polymerase and buffer.

In a preferred embodiment, the reagents for nucleotide molecule amplification comprise a primer and/or dNTP labelled with a fluorescent dye, preferably Cyanin 3 or Cyanin 5 or Oyster645.

In an alternative embodiment, the solution composition is adapted for performing the annealing of the primers on the nucleotide molecule and the specific binding of the labelled target molecule on the capture molecule during the same temperature step.

In a preferred embodiment, the thermostable DNA polymerase used for PCR on micro-array is preferably a DNA polymerase having a strong DNA binding domain preferably the Heliw-hairpin-Helix (HhH) of the topoisomerase preferably the Topo Taq DNA polymerase. In another preferred embodiment, the enzyme contains more than one DNA binding domain, preferably having at least three DNA binding domains. Also a preferred DNA polymerase is a chimeric polymerase which is active at higher salt concentrations.

Advantageously, the method of the invention is compatible with most of the thermostable DNA polymerase available on the market. It does not necessary require a 5' to 3' nuclease activity as described in the US-P-5,952,202.

Advantageously, the length of the amplified target nucleotide molecules are selected as being of a limited length preferably between 100 and 800 bases, preferably between 100 and 400 bases and more preferably between 100 and 200 bases. This preferred requirement depends on the possibility to find primers to amplify the required sequences possibly present in the sample. Too long target may reallocate faster and adopt secondary structures which can inhibit the fixation on the capture nucleotide sequences.

In a preferred embodiment, the assay of the labelled target polynucleotide molecules is performed at least 5 times preferably at least 10 thermal cycles and even preferably at least 20 thermal cycles.along the PCR cycles in order to determine the first cycle having significant signal for quantification of the polynucleotide present in the initial solution.

In a preferred embodiment, the light emission is measured at a defined timing from the beginning of a temperature step, for example after 1 min of annealing.

In another preferred embodiment, the light emission is measured within 5 min and even within 2 min and even better within 1min after the beginning of the annealing temperature step. In an alternative embodiment, the light emission is measured at the end of at least one of the 3 temperature steps used for the PCR amplification.

In still another embodiment, the light emission is measured at the end of the PCR amplification.

In a particular embodiment, the data on the quantification of the amplified target molecules performed at different PCR cycles are processed in order to quantify the amount of nucleotide molecule present in the original solution before the amplification. The amplification cycles lead to the doubling of the target sequence in each cycle when the efficiency of the amplification is maximal. Quantification of the original nucleotide concentration is calculated from the extrapolation of the first cycle which gives a detectable value or a value crossing a fixed threshold. The concentration is then calculated from a reference curve or from the data obtained on a standard molecule. So preferably, the assay of the labelled target polynucleotide molecules is performed at least 5 times along the PCR cycles in order to determine the first cycle having significant signal for quantification of the polynucleotide present in the initial solution.

In a preferred embodiment, the data are processed in order to obtain a signal value for each of the localized area. In another embodiment, the data are processed in order to obtain a signal value for each of the localized area and for the local background. The data are further processed by subtracting the background from the signal value for each of the localized area.

In an preferred embodiment, the quantification of the amount of nucleotide molecule is performed by comparing the number of thermal cycles necessary to reach a fixed value (cycle threshold or CT) with the CT of a reference nucleotide molecule. The reference nucleotide molecule is preferably amplified in the same solution and detected on the same micro-array as the target nucleotide molecule.

In another embodiment, the quantification of the amount of nucleotide molecule is performed by comparing the number of thermal cycles necessary to reach a fixed value (CT) with a standard curve wherein the CTs are plotted against standard concentration.

In another embodiment, the quantification of the amount of nucleotide molecule is performed by comparing the signal value of the localized area with a fixed value.

Preferably, the present method performs the analysis of a microarray surface having immobilized capture molecules used for detection and/or quantification of one or multiple target biological molecules labelled with a fluorophore and present in a solution comprising:
a) providing a transparent solid support with a surface having multiple capture molecules immobilized in particular surface locations forming a two dimensional micro-array configuration having at least four different locations per cm2, wherein said transparent solid support has a refractive index n1 and the solution has a refractive index n2, whereby n1 > n2;
b) contacting said solution containing said labelled target molecules with said solid support for specific binding between said labelled target and capture molecules wherein said solution comprises a light absorbing agent,
c) illuminating homogeneously the surface of the support on which the labelled target molecules are bound using an excitation light reaching said surface through the support without crossing the solution, in the presence of the solution containing said labelled target molecules thereby causing excitation of the labelled target molecules, wherein said light absorbing agent has an absorption band which overlaps the emission and/or absorption band of the fluorophore and is not a quencher molecule of the label of the target molecules,
   - collecting the emitted light through a side of said support which is inclined relative to the surface of the support on which the target molecules are bound,
   - focusing the emitted light by a lens on a detector surface which is positioned at an observation angle θobin relative to the normal to the said solid support surface in the support, such that 90° > θobin > sin-1 (n2/n1),
   - obtaining simultaneously an image of at least 4 different locations (spots) being spatially discriminated onto the surface of the detector,
d) detecting simultaneously the light emitted from at least 4 different locations (spots) through said support
e) analyzing the surface of the support in order to discriminate between the locations of the micro-array having bound targets and the locations deprived of target molecules wherein the discrimination is perfect so that no signal is attributed as positive signal to location(s) deprived of target molecules and to associate positive signal value at the location(s) related to bound labelled target molecules, and to detect and/or identify and/or quantified the target (s) molecules present in the solution.

The present invention also covers the kit which is associated with the different embodiments described here above.

Preferably the a transparent solid support of the kit has a refractive index higher than 1.33 and a thickness of at least 1 mm and better at least 3 mm and even better 5 mm with a surface that comprises at least four capture molecules present at particular locations on said solid support surface, wherein said solid support has a transparent side which is inclined relative to the surface of the support on which the capture molecules are bound, and is used for collecting the light emitted from the location of the capture molecules in the forbidden angle (θobin) and inclined by an angle of between 90 and 60° compared to the solid support surface.

The kit also preferably comprises a software for automating the process of locating the microarray spots (locations) images and quantifying the bound targets. The method utilizes a grid positioned on the area of the microarray image. The grids contain a number of rows and columns corresponding to the spatial design of the microarray. The grid is then adjusted for fitting with the arrayed pattern of the spots. Different methods exist in order to obtain the best fitting as for example described in US 6,349,144.

Preferably the computer software contains information on the coordinates of the spots and their correspondence to the targets for which they are specific.

In one embodiment, the kit also further comprises a composition for PCR amplification: at least one nucleic acid primer pair, a thermostable DNA polymerase and a plurality of dNTPs.

In a preferred embodiment, the kit contains multiple devices in the form of a strip or in a multi-wells format preferably a 96-well format.

Table 1 summarizes the properties of different light absorbing agents tested according to the invention. The Table presents the absorbance peak and the estimated width of the absorbance band, based on the experimental spectra covering around 90% of the dye absorbance. The intrinsic fluorescence of the agents at the emission wavelength of 570 nm (green channel) or at the emission of 666 nm (red channel) is indicated. Intrinsic fluorescence is expressed as the percentage of the fluorescence compared to cy3 fluorescence if present at 1 µM for green channel (= 100%) or Oyster645 fluorescence if present at 1 µM for red channel (= 100%). Experimental details are given in example 4.

In a preferred embodiment, the dye used as light absorbing agent is chosen among the dyes presented in the Table 1

| Table 1 spectral properties of some light absorbing agent | | | | |
|---|---|---|---|---|
| **Light absorbing agent (BRA) (1 %)** | **Visible spectrum** | **Absorbance spectrum peak (estimated min-max)** | **Intrinsic fluorescence (emission 570 nm) in %** | **Intrinsic fluorescence (emission 666 nm) in %** |
| (A) Black Intense | back-blue | 565 (<400-675) | | |
| (B) Blue Dextran | blue | 619 (475-750) | | |
| (C) E132 | blue | 609 (525-675) | | |
| (D) magnetic beads 1 µm | brown | below 700 (no peak) | | |
| (E) Azure A | blue | 636 (450-700) | | 38 |
| (F) Brilliant Blue | blue | 585 (500-690) | | |
| (G) E124 | red | 508 (<400-585) | 18 | 18 |
| (H) Ferritin | brown | below 500 (no peak) | 40 | 15 |
| (I) E102 + E131 | green | 638 (525-690) | | 38 |
| (J) Black Brilliant | back-blue | 571 (475-670) | | |
| (K) Blue Intense | blue | 635 (525-690) | | 47 |
| (L) E133 | blue | 635 (525-690) | | 33 |
| (M) Melanine | black | below 700 (no peak) | | |
| control 1 (no BRA) | transparent | | | |
| control 2 (dry condition) | | | | |

Some of the dyes were fluorescent at the emission wavelength of 570 nm (E124, Ferritin) and/or 666 nm (Azure A, E124, Ferritin, E102+E131, Blue intense, E133). Some agents have very broad absorbance spectrum, especially the black dyes.

The efficiency of the non fluorescent different dyes in a 1% concentration was in the following order from the most efficient to the less efficient: Black Brilliant, Black Intense, Brilliant Blue, Blue Dextran, Melanine, E132, Magnetic Beads.

Table 2 represents different light absorbing agents compatible with the PCR. The Table gives the upper concentration of the agent at which there is no inhibition of the PCR. Two concentrations of Taq polymerase were compared: 5 and 10 units. Experimental details are given in example 3.

| Table 2 light absorbing agents which are compatible with PCR | | |
|---|---|---|
| **Light absorbing agent** | **Maximum concentration in PCR (%) with 5 U Taq polymerase** | **Maximum concentration in PCR (%) with 10 U Taq polymerase** |
| (A) Black Intense | 0.05 | 0.1 |
| (B) Blue Dextran | 0.5 | 1 |
| (J) Black Brilliant | 0.05 | 0.1 |
| (K) Blue Intense | 0.05 | 0.1 |
| (L) E133 | 0.05 | 0.1 |

Using 5 units of Taq polymerase, the maximum concentration (%) of the dye which does not inhibit the PCR was 0.05% for Black Intense, E132, Black Brilliant, Blue Intense and E133 and 0.5% for Blue Dextran. Higher concentration of the agent induced inhibition of the PCR which is concentration dependant. By doubling the concentration of Taq polymerase, the concentration of the agent could be increased by a factor of 2 without inhibiting the PCR. When Blue Dextran was used, the concentration tolerance was higher and a band was still visible on the gel with 0.5% of Blue Dextran when using 5U of Taq polymerase and with 1 % of Blue Dextran when using 10U of Taq polymerase. At higher concentration of the agent, the PCR was inhibited.

A combination of dyes at their concentration limit is also a preferred option. For instance, a combination of Blue Dextran at 0.5% with Black Brilliant at 0.05% in presence of 5 units of Taq polymerase does not inhibit the PCR but the overall effect of reduction of non specific spot detection is much higher compared to the used of single dye.

### Examples

### Example 1: Hybridization on micro-array in a closed device performed by assay of a target DNA using the detection method according to the present invention and detection in the forbidden angle.

An array has been spotted on the surface of a plastic device which was constructed according to the specification described in the Application EP 2017354A1.

The reaction device was a disposable plastic cartridge used for each assay and placed inside the instrument for the PCR, hybridization and detection steps. It comprises three interconnected chambers between which the liquid can flow. The injection chamber is mainly located below the screw cap and lies between the two flat chambers found on each side of the cartridge. Both flat chambers are 10 x 20mm in area and 0.5 mm thick. One of the flat chambers is called "thin chamber" or "PCR chamber" because the plastic enclosure - above and below the solution - are only 0.5 mm thick. The other chamber, called the "optical chamber", has one side of the plastic enclosure 0.5 mm thick and the other 3.5 mm being the optical bloc. Both these chambers are designed to hold about 100 µL of solution in each. The optical block is in Zeonex and is from optical grade. The side part opposite to the observation side was covered with a black paint. A representation of the device is provided in figure 1.

The complete cartridge is created by assembly and laser welding of three plastic parts. The top part contains the threaded feature for the screw cap and the upper enclosures for the flat and optical chambers. The middle part is welded to the upper part and provides the lower enclosure for the thin chamber and has an opening to create the optical chamber when the optical block is welded to it from below. All three parts together with the screw cap form the plastic cartridge.

The transfer of the liquid from one part to other is obtained by a g-force applied in one direction or the other by centrifugation.

The plastic devices were activated by plasma treatment for production of epoxy groups on the surface.

The capture polynucleotide sequences were printed onto the optical block surface with a home made robotic device using 250 µm diameter pins. The spots have 400 µm in diameter and the volume dispensed is about 0.5 nL. Each capture molecule is potted in triplicate. Devices were dried at room temperature, welded and stored at 20° C until used. An array of (22 x 9 spots) has been spotted with solutions containing:
- Positive detection controls being Cy5 labelled 5'end amino-polynucleotides (3 µM) at 11 locations in the array. In addition, 7 different concentration of detection control (3 µM, 2 µM, 1 µM, 500 nM, 400 nM, 300 nM and 200 nM) were spotted in 2 replicates: 5'NH2-
   TACCTACTACGCTACACGAACCTACAAGACAAGATAAAGACAGACTCATG -3' Cy5.
- Negative detection controls (spotting buffer) at 4 locations around the array
- Positive hybridization control: 5'-NH2 polynucleotide capture molecule specific for GUT (ATgut01i105), comprising a specific capture portion
GUT probe:
5'NH2-GTGCGCCCCAGCCCTCACGGCATGATG-3' which is spotted at 18 locations around the array and at 3 locations inside the array.
   - Negative hybridization controls (spacer portion of the positive hybridization control) spotted at 3 locations inside the array
   - 5'-NH2 polynucleotide capture molecules specific for 31 target genes of the VAP-chip (Eppendorf Array Technologies, Namur, Belgium) being specific for bacteria species and antibiotic resistance to be detected: aacA4, aacC1, aadB, aadA1, aadA23, CTXM1, CTXM2, CTXM8, CTXM9, KPC, MecA, OXA23, OXA58, VanA, VanB, VIM. A. baumanii, E. aerogenes, E. cloacae, E. coli, E. faecium, E. faecalis, H. influenzae, K. oxytoca, K. pneumoniae, L. pneumoniae, P. aeruginosa, S. aureus, S. maltophilia, S. marcescens, S. pneumoniae.

A 5'-NH2 polypolynucleotide capture molecule specific for lectin was also spotted as positive PCR control.

All probes and positive hybridization controls had a specific capture molecule sequence and a spacer as described in US 7,205,104.

At the exception of the positive detection controls, all other capture probes were spotted at a concentration of 16 µM. The spots size on the array is around 400 µm diameter.

Plastic device were then washed 1 x 5 min in SSC2 x pH7 + BSA1% + SDS 0.1%, 2 x 1 min in H₂O and finally 1x3 min in boiling water. After the washing steps, plastic device were dried at room temperature and stored in the dark at room temperature. 110 µL of a solution containing 50mM TAPS, 95mM Tris-HCl, 2 mM MgCl₂, 20 nM Oyster645-GUT (complementary to the capture probe gut) and 500 nM of Oyster645-MecA amplicon (complementary to the capture probe MecA) were introduced in a first plastic device.

The specific sequence of the Oyster645-GUT probe is the following:
5'-CATCATGCCGTGAGGGCTGGGGCGCAC-3'

The same composition comprising as light absorbing agent Blue Dextran (Sigma, ref. D5751) 4.5% was introduced into a second plastic device. The devices were hybridized for 15 min at 58°C and the detection of the targets (Oyster645-GUT probe and Oyster645-MecA amplicon) hybridized onto their specific capture molecule on the array was performed within the forbidden angle with the fluorescent solution being present in the chamber covering the optical block as described in EP 2017354A1 in the RAP Instrument (Eppendorf AG, Hamburg, Germany). The full array is illuminated through the optical block by a homogeneously distributed laser light and the detection of the emitted light from the bound target present on the surface is measured by a CCD camera positioned in the forbidden angle as explained in the patent. The exposure time for the image was 5 sec.

Quantification of the array spots was performed using the software Filox version 3.4 (Eppendorf AG).

A picture showing the signals of the bound target related to solution background with automatic position of the grid for data analysis is provided in figure 2. The picture (A) presents the image of the array of the first device which is detected in presence of fluorescent target present in the solution without light absorbing agent. Picture (B) represents the image of the array of the second device containing the fluorescent solution with light absorbing agent. In (A), there is a misgridding which hampers data analysis. In (B), the grid is correctly positioned. In addition, the background is more homogeneous with a reduction of the light diffraction from surface defects like scratches and dust.

A quantification of the spots is provided in figure 3. A manual positioning of the grid has been performed on the device which does not contain the light absorbing agent to allow proper recognition of the spots (localized areas) and their quantification.

The quantification showed that without light absorbing agent a negative detection control spot gave a false positive result while there is no false positive result in presence of light absorbing agent in the fluorescent solution. In both cases, the target gene MecA was corrected identified (1/30) and the positive hybridization control (gut) as well (1/1). The signals of the MecA spots were 31,033 ± 2,757 without dye and 28,944 ± 1,265 with dye when deduction of the background was done. The two values were not considered as different (student test). This exemplified the absence of inhibitory effect of the dye on the target reaction on its capture probe. The data also exemplified that the standard deviations of the background signals are much higher in the absence of the dye which indicated the heterogeneous distribution of the non specific light on the surface comprising the array.

### Example 2: Hybridization on micro-array in a closed device performed by assay of a target DNA using the detection method according to the present invention and detection in evanescence.

The array design and hybridization condition are the same as in example 1. A detection of the array using evanescence field is used.

Two arrays are spotted on a glass slide. The Diaglass slides (Eppendorf AG, Hamburg, Germany) are functionalized for the presence of aldehyde according to the method described in patent application WO02/18288. The protocol described in this patent application is followed for the grafting of 5'-NH2 polynucleotide capture probes to aldehyde derivatized glass. The aminated capture molecules are spotted from solutions at concentrations of 3 µM. The capture molecules are printed onto microscopic glass slides with a home made robotic device using 250 µm diameter pins. The spots are 400 µm in diameter and the volume dispensed is about 0.5 nL. Slides are dried at room temperature and stored at 4 °C until used.

The glass arrays are fastened with 1.5 mm x 1.5 mm adhesive-backed "Frame-Seal Incubation Chambers" (MJ Research Inc., Watertown, MA) forming a reaction volume of 65 µl. On the first array, 65 µl of the hybridization solution is loaded without light absorbing agent. On the second array, the same solution comprising the light absorbing agent is loaded. Then the hybridization frames are sealed with a coverslip in Zeonex having a thickness of 350 µm.

The slide is then entered into the PortArray 5000™ Microarray Reader (Aurora Photonics, Inc.) and hybridization is performed for 15 min at 58°C and the detection of the targets (Oyster645-GUT probe and Oyster645-MecA amplicon) hybridized onto their specific capture molecule on the array is performed within the Aurora Reader. The reader is equipped with 532 nm laser. It is adapted to read chip format of 25 mm x 75 mm (classical glass slide format). The illumination system provides a uniform light distribution over the array.

The exposure time is equal to 30 sec. The full image of the array is collected in a single acquisition. The reader uses an illumination system which transmits light through diffuser into the glass side, so that the light illuminates the array from inside ofthe glass substrate and produce evanescent field. The emission light is detected by a CCD camera. After image acquisition, the scanned 16-bit images are imported to the software, Filox version 3.4 (Eppendorf AG) which is used to quantify the signal intensities.

### Example 3: Compatibility of different dyes with PCR amplification

PCR was designed for the amplification of the 35 promoter element of DNA sample of a genetically modified organism (GMO).

The primers used in this experiment had the following sequences:
OP35SF: 5'- CGTCTTCAAAGCAAGTGGATTG -3'
OP35SR: 5'- TCTTGCGAAGGATAGTGGGATT -3'

The 50 µL PCR mix contained 200µM of dATP, 200µM of dCTP, 200µM of dGTP, 100µM of dTTP, 300µM of dUTP, 200 nM of each primer OP35SF and OP35SR, 1U of UNG (ref 71960, USB, Cleveland, Ohio, USA), 5 or 10U SuperSalt™ Taq Polymerase in the RAP Buffer ( Eppendorf AG, Hamburg, Germany) and 10⁶ copies of the P35S plasmidic DNA sample (1 ng/µL) and one light absorbing agent (selected from Black Intense, Blue Dextran, Black Brilliant, Blue Intense and E133).

For each tested light absorbing agent, PCR were performed with different concentrations of agent: 0.005, 0.01, 0.02, 0.05, 0.1, 0.5, 1 and 2% and either 5 U or 10 U of Taq polymerase in PCR mix. Controls tubes were performed without light absorbing agent with 5 U or 10 U of enzyme.

The PCR performed in PCR tubes in a thermocycler (Eppendorf, Hamburg, Germany). Samples were pre incubated for 10 min at 25°C and then were first denatured at 94 °C for 3 min. Then 40 cycles of amplification were performed consisting of 30 sec at 95 °C, 90 sec at 60 °C and 30 sec at 72 °C.

After PCR, 1 µL of the PCR product was analyzed by electrophoresis (Agilent Technologies, 2100 Bioanalyzer). The expected size of the amplicon was 79 bp. A band at expected size was observed in the control tubes which did not contain the background reducing agent. The results presented in Table 2 give the highest tested concentration which did not inhibit the PCR.

### Example 4: Real-time multiplex PCR on micro-array in a closed device performed by assay of a target DNA using the detection method according to the present invention and detection in the forbidden angle.

The array design and plastic devices are the same as in example 1.
Devices 1: control condition, no light absorbing agent.
Devices 2: Brilliant Black 0.025% and Blue Dextran 0.25% as light absorbing agents.

PCR contained primers for the amplification of the following 10 targets: A. baumanii, E. aerogenes, E. faecium, H. influenzae, L. pneumoniae, P. aeruginosa, S. maltophilia, S. pneumoniae and lectin.

The 110 µL PCR mix contained 50 mM TAPS, 95 mM Tris-HCl, 2 mM MgCl₂,200µM of dATP, 200µM of dCTP, 200µM of dGTP, 100µM of dTTP, 300µM of dUTP, 10 primer pairs with reverse primers at 75 nM (labelled with Oyster645 at 5'end, total fluorescence = 750 nM) and sense primer being unlabelled at 50 nM, 1U/50 µl of UNG (ref 71960, USB, Cleveland, Ohio, USA), 5U/50 µl SuperSalt™ Taq Polymerase and 10⁶ copies of DNA sample (A. baumanii) and light absorbing agents (Brilliant Black 0.025% and Blue Dextran 0.25%) or no light absorbing agent (control condition).

Each mix was placed inside one of the two plastic devices in the optical chamber, closed by the screw cap; fixed on the rotor holder of the real-time PCR and processed with RAP-ER instrument (Eppendorf AG, Hamburg, Germany).

The conditions of the PCR were the following: samples were denatured at 96°C for 3 min then 30 cycles of amplification were performed consisting of 60 sec at 96 °C (denaturation), 90 sec at 58 °C (annealing) and 60 sec at 72 °C (elongation).

Every 3 cycles after cycle 18 (cycles 18, 21, 24, 27 and 30) the detection of the amplified targets hybridized onto their specific capture molecule on the micro-array was performed during the annealing step of the PCR in the presence of PCR solution. Hybridization of the targets occurred during the annealing step for 80 sec and then the image of the micro-array was acquired for 10 s within the forbidden angle.

The fluorescent solution covering the optical block was flushed to another chamber by centrifugation and detection was also performed in dry condition.

A graph representing the signal intensity (Signal - Background) of the bound target A. baumanii according to the cycles is provided in figure 5. The two PCR conditions compared are: (1A) the absence of light absorbing agent, (2A) the presence of light absorbing agent being Brilliant Black 0.025% and Blue Dextran 0.25%. Graphs (1B) and (2B) provide a comparison ofthe signal in dry condition (flushed condition).

With the solution being present on the array during the detection (solution condition), the target amplicons was amplified and detected at cycle 22 in presence of light absorbing agent. In absence of light absorbing agent, the signal is below the background and is not distinguishable from the background.

This result was confirmed by analyzing the array after incubation with the amplicons but removing most of the solution from the array surface by centrifugation before making the detection (dry condition).

## Claims

1. A method, for the analysis of a microarray surface having immobilized capture molecules used for detection and/or quantification of one or multiple target biological molecules labelled with a fluorophore and being present in a solution comprising:
a) providing a transparent solid support with a surface having multiple capture molecules immobilized in particular surface locations forming a micro-array configuration having at least four different locations per cm²,
b) contacting said solution containing said labelled target molecules with said solid support for specific binding between said labelled target and capture molecules wherein said solution comprises a light absorbing agent,
c) illuminating the surface of the support on which the labelled target molecules are bound using an excitation light reaching said surface through the support in the presence of the solution containing said labelled target molecules thereby causing excitation of the labelled target molecules, wherein said light absorbing agent has an absorption band which overlaps the emission and/or absorption band of the fluorophore and is not a quencher molecule of the label of the target molecules,
d) detecting the light emitted from the said surface locations through said support,
e) analyzing the surface of the support in order to discriminate between the locations of the micro-array having bound targets and the locations deprived of target molecules wherein the discrimination is perfect so that no signal is attributed as positive signal to location(s) deprived of target molecules and to associate positive signal value at the location(s) related to bound labelled target molecules, and
f) detecting and/or identifying and/or quantifying the target(s) molecules present in the solution.

2. The method of claim 1, wherein a spatial determination of spot deposition on the surface of the support is recognized by a two dimensional grid comprising the same number of spots as the array is perfect.

3. The method of claims 1 and 2, wherein the image characteristics values are perfectly computed.

4. The method of claim 1, wherein the labelled target molecules are polynucleotides resulting from an amplification of a polynucleotide molecule performed in the same solution and in the same device as the detection and/or quantification of the said labelled target molecules.

5. A method for performing the analysis of a microarray surface having immobilized capture molecule for performing real time PCR amplification of a polynucleotide molecule being present in a solution, said method comprising the steps of:
a) providing a closed device comprising a transparent solid support with a surface having capture polynucleotide molecules immobilized thereon in at least one particular surface location;
b) introducing a solution containing said polynucleotide molecule into said closed device, reagents for polynucleotide amplification, at least one label being a fluorophore and at least one light absorbing molecule as a light absorbing agent which has an absorption band which overlaps the emission and/or absorption band of the fluorophore and is not a quencher molecule of said at least one fluorescent label;
c) submitting the solution to at least 2 thermal cycles having at least 2 and preferably 3 different temperature steps in order to obtain labelled target polynucleotide molecules by PCR amplification;
d) measuring at least twice the obtained labelled target polynucleotide molecules present in said solution after or during at least two thermal cycles in the following way:
- incubating said labelled target polynucleotide molecules under conditions allowing a specific binding between said labelled target polynucleotide molecules and corresponding capture molecules,
- illuminating the surface of the support on which the labelled target polynucleotide molecules are bound using an excitation light reaching said surface through the support, in the presence of the solution containing the labelled target polynucleotide molecules thereby causing excitation of the said labelled target polynucleotide molecules,
- detecting the light emitted from the said surface locations through said support;
e) analyzing the surface of the support in order to discriminate between the locations of the micro-array having bound targets and the locations deprived of target molecules wherein the discrimination is perfect so that no signal is attributed as positive signal to location(s) deprived of target molecules and to associate a positive signal value at the locations related to bound labelled target polynucleotide molecules;
f) Processing the signal value data obtained after or during at least one thermal cycle in order to detect and/or quantify the target polynucleotide molecule present in the solution during and/or before the amplification.

6. The method of claims 1 and 5, wherein the illumination of the surface support and detection of the light emitted are performed by a physical method which differentiates the signal from surface bound target molecules from other target molecules present in the solution.

7. The method of claims 1 and 5, wherein the light emitted from the surface locations through said support is detected in an angle being a forbidden angle, which differentiates the light emitted from the excited labelled target molecules bound at the said surface locations from the light emitted from the excited labelled target molecules present in the solution.

8. The method of claim 1 and 5, wherein the light emitted from the surface locations where labelled target molecules are bound, is collected through a side of said support which is inclined relative to the surface of the support on which the target molecules are bound by a lens and focused on a detector surface which is positioned at an observation angle θobin relative to the normal to the said solid support surface in the support, such that 90o > θobin > sin-1 (n2/n1), with n1 being the refractive index of the transparent solid support and n2 the refractive index of the target molecule solution, whereby n1 > n2.

9. The method of claims 1 and 5, wherein the excitation of the bound labelled target molecules is obtained by evanescence light.

10. The method of claims 1 and 5, wherein the illumination of labelled target molecules bound at the surface locations are detected by scanning, with the excitation light being focused on the surface of the support with a focal plane of 1 mm or less.

11. The method of claims 1 and 5, wherein the light absorbing agent is one or a mixture of the agent(s) listed in Table 1.

12. The method of claims 1 and 5, wherein the light absorbing agent is Black Brilliant, Black Intense, Brilliant Blue, Blue Dextran, Melanine, E132.

13. The method of claim 1 and 5, wherein the light absorbing agent does not bind to the labelled target molecule nor to the capture molecules.

14. The method of claims 1 and 5, wherein the absorption band of the light absorbing agent is comprised between 300 and 1000 nm, preferably between 400 and 700 nm.

15. A kit for detection and/or quantification of one or multiple polynucleotide target molecules being present in a solution by the analysis of a micro-array having immobilized capture molecules specific of said targets comprising:
a) an hybridization composition comprising:
- a salt composed of a cation and an anion, wherein the said anion has preferably two carboxylic groups and one amine group, wherein the salt concentration in the composition is comprised between 10 mM and 400 mM and an exclusion agent from 1% to 20% by weight,
- a fluorescent label,
- a light absorbing agent wherein said light absorbing agent is a light absorbing molecule which has an absorption band which overlaps the emission and/or absorption band of the fluorophore and is not a quencher molecule of said fluorescent label;
b) a device comprising:
- a transparent solid support having refractive index higher than 1.33 and a thickness of at least 0.5 mm and better at least 3 mm and even better 5 mm with a surface that comprises at least four capture molecules present at particular locations on said solid support surface,
- a chamber being formed on the surface of the said solid support covering the capture molecules having a thickness of 2 mm or lower;
c) a software system comprising program instruction for position configuration indicating the position of the grid point within said frame with the two dimensional array of grid comprising the same number of spots as the array and a data storage having the identification of the grid points according to their position information on the array and their corresponding target molecules; preferably further comprising a composition for PCR amplification: at least one nucleic acid primer pair, a thermostable DNA polymerase and a plurality of dNTPs.
